# EUROPEAN PATENT SPECIFICATION

(11) **EP 3 462 568 B1**
(45) Date of publication and mention of the grant of the patent: **30.10.2019**
(21) Application number: 18203682.2
(22) Date of filing: 15.05.2014
(51) Int. Cl.: H02J 7/00

(54) **BATTERY CHARGING APPARATUS AND CHARGING METHOD**
BATTERIELADEVORRICHTUNG UND VERFAHREN
APPAREIL ET PROCÉDÉ DE CHARGE DE BATTERIE

(30) Priority: 28.01.2014 CN 201410043148
(43) Date of publication of application: 03.04.2019
(62) Divisional of application: 14881067.4
(73) Proprietor: Guangdong Oppo Mobile Telecommunications Corp., Ltd, Dongguan, Guangdong 523841 (CN)
(72) Inventor: Zhang, Jialiang, Dongguan, Guangdong, 523841 (CN); Liu, Fengshuo, Dongguan, Guangdong, 523841 (CN); Wu, Kewei, Dongguan, Guangdong, 523841 (CN); Peng, Liangcai, Dongguan, Guangdong, 523841 (CN); Liao, Fuchun, Dongguan, Guangdong, 523841 (CN); Hu, Yuanxiang, Dongguan, Guangdong, 523841 (CN)
(74) Representative: Hoffmann Eitle

(56) References cited:
- EP-A2- 2 665 153
- US-A1- 2006 284 595
- US-A1- 2013 175 978

## Description

### TECHNICAL FIELD

The disclosure belongs to the technical field of charging and particularly relates to a battery charging apparatus and charging method thereof.

### BACKGROUND ART

Currently, the battery of the electronic equipment is charged via its power adaptor, while the power adaptor typically charges the battery in a constant voltage output manner; however, for high-storage battery, charging the battery in a constant voltage output manner may results in a too long charging time, and hence the prior art above cannot realize quick charge for battery to reduce the charging time.

Prior art document EP 2 665 153 A2 relates to a mobile terminal capable of wirelessly charging a battery using a magnetic induction method. The mobile terminal may include a battery configured to support normal charging mode and fast charging mode, a power pick-up unit configured to pick up power transmitted by a wireless charging device based on magnetic induction, generate a charging voltage based on the pick-up power, and supply the charging voltage to the battery, and a control unit configured to increase the pick-up power by controlling an impedance of the power pick-up unit and increase a charging speed of the battery based on the increased pick-up power in the fast charging mode. The mobile terminal can increase the charging speed of the battery in such a way as to increase pick-up power from power transmitted by the wireless charging device by varying the impedance of the power pick-up unit in fast charging mode. Said document EP 2 665 153 A2 does not disclose that, in the wording of the claims, when the output current value of said power adaptor falls within a regular current range the battery is charged in the regular charge mode, said power adaptor is configured to perform a quick charge inquiry communication.

Prior art document US 2013/0175978 A1 relates to a battery charging system including an adapter and a control device. The adapter is connected between an AC voltage source and a battery. The adapted converts the AC voltage source into a DC voltage to charge the battery. The control device is connected to the adapter and the battery. The control device includes a charge-setting module, a charging current control module, and a charging voltage control module.

Prior art document US 2006/0284595 A1 relates to a charging mode control circuit and method. By utilizing such charging mode control circuit and method, a secondary battery fixed in a portable device can be quickly charged when the portable device communicates with an external computer.

### SUMMARY OF THE DISCLOSURE

The mentioned problems are solved by the subject-matter of the independent claims. Further preferred embodiments are defined by the dependent claims.

### BRIEF DESCRIPTION OF THE DRAWINGS

Figure 1 is a topological structure diagram of the battery charging apparatus provided by the embodiments of the disclosure;
Figure 2 is a realization flow chart of the battery charging method for the battery charging apparatus as shown in Figure 1;Figure 3 is another realization flow chart of the battery charging method for the battery charging apparatus as shown in Figure 1;
Figure 4 is a local realization flow chart of methods and steps composed after step S4 in the battery charging method as shown in Figure 2 and Figure 3;
Figure 5 is a specific realization flow chart of step S1 in the battery charging method as shown in Figure 2 and Figure 3;
Figure 6 is a specific realization flow chart of step S2 in the battery charging method as shown in Figure 2 and Figure 3;
Figure 7 is a specific realization flow chart of step S3 in the battery charging method as shown in Figure 2 and Figure 3;
Figure 8 is a specific realization flow chart of step S4 in the battery charging method as shown in Figure 2 and Figure 3;
Figure 9 is a structure chart of the sample module for the battery charging apparatus provided by the embodiments of the disclosure;
Figure 10 is a structure chart of the sample circuit of the power adaptor in the battery charging apparatus as shown in Figure 9;
Figure 11 is a structure chart of the sample circuit of the charging control module in the battery charging apparatus as shown in Figure 9;
Figure 12 is another structure chart of the sample circuit of the charging control module in the battery charging apparatus as shown in Figure 9.

### DETAILED DESCRIPTION OF THE EMBODIMENTS

In order to make the objective, the technical solutions and the advantages of the disclosure more clear, the disclosure is further described in details below in conjunction with the accompanying drawings and embodiments: It is understood that the specific embodiments described herein are only used to explain the disclosure, but not used to define the disclosure.

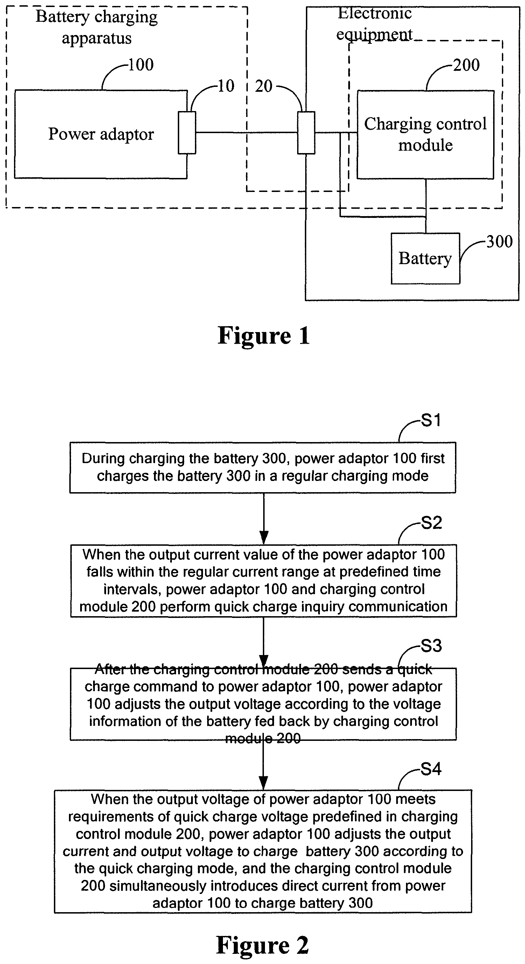

Figure 1 shows a topology of a battery charging apparatus provided by an exemple embodiment of the disclosure, and for illustration purposes, only the portion related to the embodiments of the disclosure is shown, which is described in details as follows:
The battery charging apparatus provided by the embodiments of the disclosure comprises a power adaptor 100 and a charging control module 200. The power adaptor 100 charges a battery 300 of an electronic equipment via a communication interface 10. The charging control module 200 is received in the electronic equipment. The charging control module 200 and the battery 300 are electrically connected with the communication interface 10 of the power adaptor 100 via the communication interface 20 of the electronic equipment. And the charging control module 200 electrically connects the battery 300 to detect the voltage of the battery 300. In at least embodiment, the charging control module 200 electrically connects electrodes of the battery 300. The communication interface 10 of the power adaptor 100 and the communication 20 of the electronic equipment may be USB interfaces or the mini-USB interface (i.e. Micro-USB interface).

During charging the battery 300, the power adaptor 100 first charges the battery 300 in a regular charging mode. When the output current value of the power adaptor 100 is within a regular current range over the predefined time intervals, the power adaptor 100 and the charging control module 200 perform quick charge inquiry communication; after the charging control module 200 sends a quick charge command to the power adaptor 100, the power adaptor 100 adjusts the output voltage according to the battery voltage information fed back by the charging control module 200; and when this output voltage meets requirements of quick charge voltage predefined in the charging control module 200, the power adaptor 100 adjusts the output current and output voltage to charge the battery 300 in the quick charge mode, and the charging control module 200 simultaneously introduces direct current from the power adaptor 100 to charge the battery 300.

Based on the battery charging apparatus as shown in Figure 1, an exemple embodiment of the disclosure may further provide a battery charging method, as shown in Figure 2, such exemple battery charging method comprising steps as follows:
S1. During the battery 300 charging, the power adaptor 100 first charges the battery 300 in a regular charging mode;
S2. When the output current value of the power adaptor 100 is within the regular current range over the predefined time intervals, the power adaptor 100 and the charging control module 200 perform quick charge inquiry communication;
S3. After the charging control module 200 sends a quick charge command to the power adaptor 100, the power adaptor 100 adjusts the output voltage according to the battery voltage information fed back by the charging control module 200;
S4. When the output voltage of the power adaptor 100 meets requirements of quick charge voltage predefined in the charging control module 200, the power adaptor 100 adjusts the output current and output voltage to charge the battery 300 according to the quick charge mode, and the charging control module 200 simultaneously introduces direct current from the power adaptor 100 to charge the battery 300.

In at least one embodiment, the predefined time interval may be 3 S (seconds), and the regular current range may be set as [1 A, 4 A].

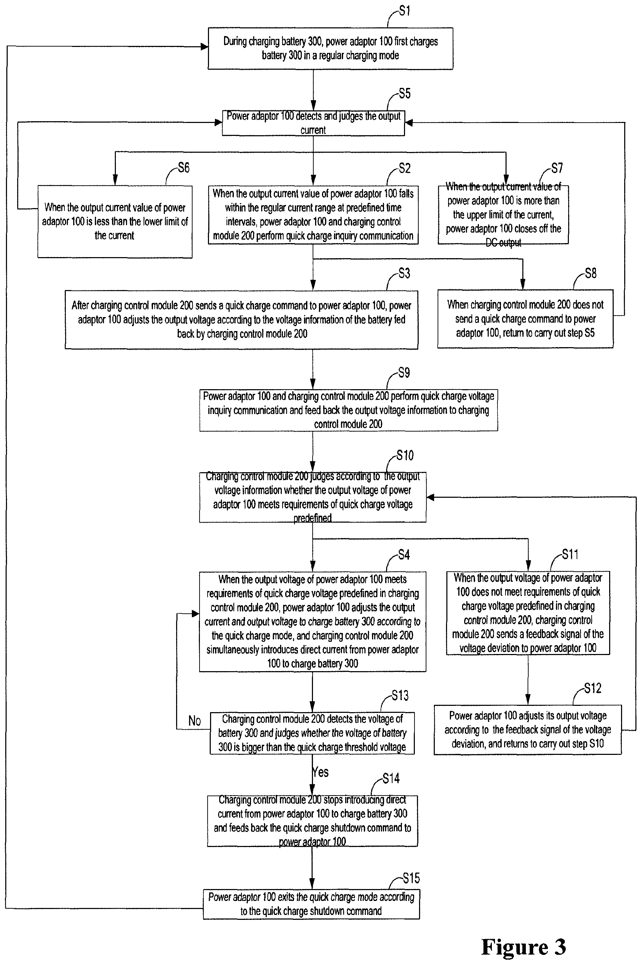

In consideration that the output current value of the power adaptor 100 may not be within the regular current range, as a result, based on the battery charging method as shown in Figure 2, as shown in Figure 3, after step S1, it further comprises steps as follows:
S5. The power adaptor 100 detects and judges the output current;
S6. When the output current value of the power adaptor 100 is less than lower limit of the current, return to carry out step S5;
S7. When the output current value of the power adaptor 100 is more than the upper limit of the current, the power adaptor 100 closes off the DC output. In other words, the situation that the output current value of the power adaptor 100 is more than the upper limit of the current can be judged as output short-circuited at this moment, and as a result, the power adaptor 100 closes off the DC output to be in short-circuit protection.

In this embodiment, the step S6 and the step S7 above are steps parallel with step S2 and are applied to respond to circumstances that the output current value of the power adaptor 100 is less than the lower limit of the current and more than the upper limit of the current, respectively. The lower limit of the current may be 1A, and the upper limit of the current above may be 4 A.

After carrying out step S2 above, in consideration that the charging control module 200 may not send quick charge command to the power adaptor 100 (including communication failure or the charging control module 200 feeding back quick charge rejection command), as a result, in the battery charging method as shown in Figure 3, after step S2, it further comprises steps as follows:
S8. When the charging control module 200 does not send a quick charge command to the power adaptor 100, return to carry out step S5.

It can thus be seen that step S8 is a step parallel with step S3, that is, when the charging control module 200 does not instruct the power adaptor 100 to enter the quick charge mode, the power adaptor 100 continues to detect and judge the output current.

As shown in Figure 3, between step S3 and step S4, the battery charging method further comprises steps as follows:
S9. The power adaptor 100 and the charging control module 200 perform quick charge voltage inquiry communication therebetwen and the power adaptor 100 feeds back the output voltage information to the charging control module 200;
S10. The charging control module 200 judges whether the output voltage of the power adaptor 100 meets requirements of quick charge voltage predefined according to the output voltage information.

In this embodiment, the requirements of quick charge voltage above may be the rated range of quick charge voltage or the rated value of quick charge voltage. That is, if the output voltage of the power adaptor 100 is within the rated range of quick charge voltage or equal to the rated value of quick charge voltage, the output voltage of the power adaptor 100 meets requirements of quick charge voltage. If after carrying out step S10, the charging control module 200 does not feed back any signal to the power adaptor 100, it means the communication between the the power adaptor 100 and the charging control module 200 fail, and the power adaptor 100 is required to carry out reset operation.

In addition, in consideration that the output voltage of the power adaptor 100 may not meet requirements of quick charge voltage predefined in the charging control module 200, as shown in Figure 3, between step S10 and step S4, the method further comprises steps as follows:
S11. When the output voltage of the power adaptor 100 does not meet requirements of quick charge voltage predefined in charging control module 200, the charging control module 200 sends a feedback signal of the voltage deviation to the power adaptor 100;
S12. The power adaptor 100 adjusts its output voltage according to the feedback signal of the voltage deviation, and returns to carry out step S10.

It should be noted that the feedback signal of the voltage deviation includes a feedback signal of low voltage and the feedback signal of high voltage. If the voltage is low, the power adaptor 100 increases the output voltage according to the feedback signal of low voltage, and if the voltage is high, the power adaptor 100 lowers the output voltage according to the feedback signal of high voltage.

In addition, as shown in Figure 3, after step S4, the battery charging method further comprises steps as follows:
S13. The charging control module 200 detects the voltage of the battery 300 and judges whether the voltage of the battery 300 is bigger than the quick charge threshold voltage; if yes, carry out step S14, and if not, return to carry out step S4;
S14. The charging control module 200 stops introducing direct current from the power adaptor 100 to charge the battery 300 and feeds back a quick charge shutdown command to the power adaptor 100;
S15. The power adaptor 100 exits from the quick charge mode according to the quick charge shutdown command above and returns to carry out step S1.

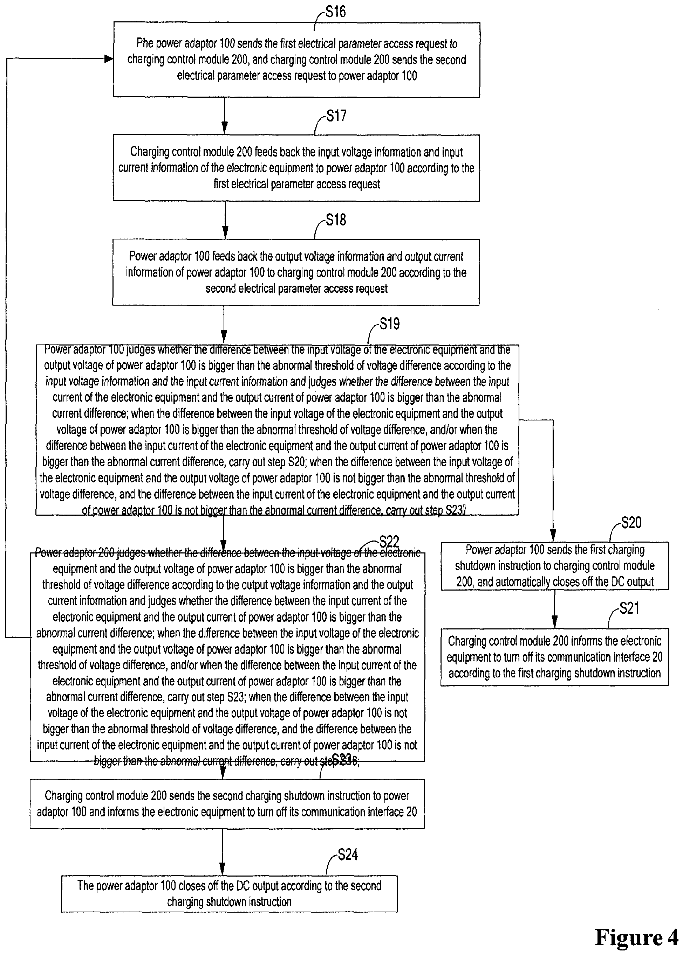

In the quick charge mode above, in order to judge whether the impedance between the power adaptor 100 and the charging control module 200 is abnormal, so as to further judge whether the connection (including the interface connection, battery contact and wires) between the power adaptor 100 and the charging control module 200 is abnormal; if judged result is abnormal, stop charging to protect the power adaptor 100 and the electronic equipment; as a result, while carrying out step S4 above, as shown in Figure 4, the battery charging method further comprises steps as follows:
S16. The power adaptor 100 sends a first electrical parameter access request to the charging control module 200, and the charging control module 200 sends a second electrical parameter access request to the power adaptor 100;
S17. The charging control module 200 feeds back the input voltage information and input current information of the electronic equipment to the power adaptor 100 according to the first electrical parameter access request;
S18. The power adaptor 100 feeds back the output voltage information and output current information of the power adaptor 100 to the charging control module 200 according to the second electrical parameter access request;
S19. The power adaptor 100 judges whether the difference between the input voltage of the electronic equipment and the output voltage of the power adaptor 100 is bigger than the abnormal threshold of voltage difference according to the input voltage information and the input current information and judges whether the difference between the input current of the electronic equipment and the output current of the power adaptor 100 is bigger than the abnormal current difference; when the difference between the input voltage of the electronic equipment and the output voltage of the power adaptor 100 is bigger than the abnormal threshold of voltage difference, and/or when the difference between the input current of the electronic equipment and the output current of the power adaptor 100 is bigger than the abnormal current difference, carry out step S20; when the difference between the input voltage of the electronic equipment and the output voltage of the power adaptor 100 is not bigger than the abnormal threshold of voltage difference, and the difference between the input current of the electronic equipment and the output current of the power adaptor 100 is not bigger than the abnormal current difference, carry out step S22;
S20. The power adaptor 100 sends a first charging shutdown instruction to the charging control module 200, and automatically closes off the DC output;
S21. The charging control module 200 informs the electronic equipment to turn off its communication interface 20 according to the first charging shutdown instruction;
S22. The power adaptor 200 judges whether the difference between the input voltage of the electronic equipment and the output voltage of the power adaptor 100 is bigger than the abnormal threshold of voltage difference according to the output voltage information and the output current information and judges whether the difference between the input current of the electronic equipment and the output current of the power adaptor 100 is bigger than the abnormal current difference; when the difference between the input voltage of the electronic equipment and the output voltage of the power adaptor 100 is bigger than the abnormal threshold of voltage difference, and/or when the difference between the input current of the electronic equipment and the output current of the power adaptor 100 is bigger than the abnormal current difference, carry out step S23; when the difference between the input voltage of the electronic equipment and the output voltage of the power adaptor 100 is not bigger than the abnormal threshold of voltage difference, and the difference between the input current of the electronic equipment and the output current of the power adaptor 100 is not bigger than the abnormal current difference, carry out step S16;
S23. The charging control module 200 sends a second charging shutdown instruction to the power adaptor 100 and informs the electronic equipment to turn off its communication interface 20;
S24. The power adaptor 100 closes off the DC output according to the second charging shutdown instruction.

In at least one embodiment, the input voltage information of the equipment and the input current information of the equipment refer to the input voltage information and the input current information of the electronic equipment, respectively.

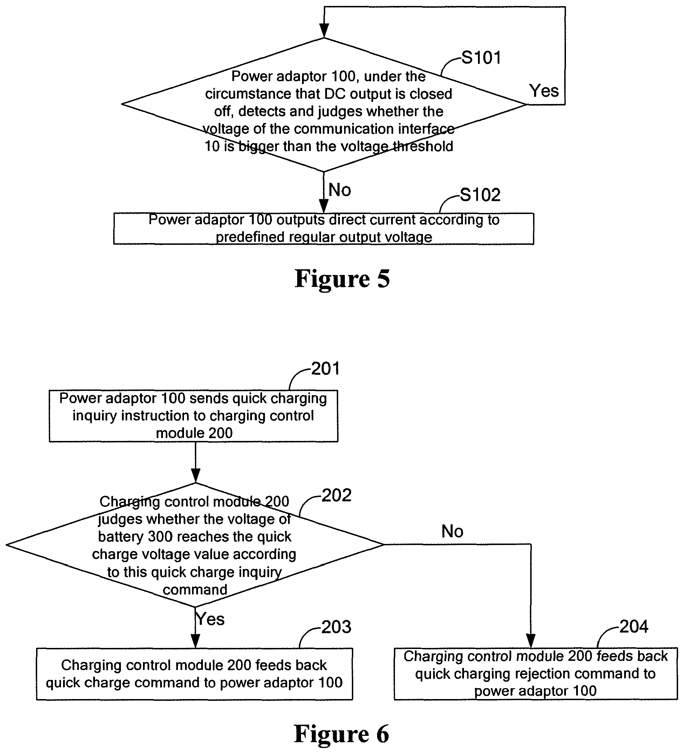

Furthermore, in step S1 as shown in Figure 2 and Figure 3 above, the steps of the power adaptor 100 used to charge the battery 300 in a regular charging mode comprise the following steps (as shown in Figure 5):
S101. The power adaptor 100, under the circumstance that DC output is turned off, detects and judges whether the voltage of the communication interface 10 is bigger than the voltage threshold; if yes, continue to carry out step S101 (it is indicated that the charging control module 200 does not yet exit from the quick charge mode at this moment), and if not, carry out step S102;
S102. The power adaptor 100 outputs direct current according to predefined regular output voltage.
in this embodiment, in the step S101, detecting the voltage of the communication interface 10 of the power adaptor 100 is to prevent that since the charging control module 200 does not exit from the last quick charge mode, the power adaptor 100 stills continues to carry out quick charge for the battery 300, which in turn results in overcharge of the battery 300. The voltage threshold may be 2 V, and the regular output voltage may be set as 5.1 V.

Furthermore, in step S2 as shown in Figure 2 and Figure 3 above, the steps of the power adaptor 100 and the charging control module 200 carrying out quick charge inquiry communication comprise the following steps (as shown in Figure 6):
S201. The power adaptor 100 sends quick charge inquiry instruction to the charging control module 200;
S202. The charging control module 200 judges whether the voltage of the battery 300 reaches the quick charge voltage value according to this quick charge inquiry instruction; if yes, carry out step S203, and if not, carry out step S204;
S203. The charging control module 200 feeds back quick charge command to the power adaptor 100;
S204. The charging control module 200 feeds back quick charge rejection command to the power adaptor 100;

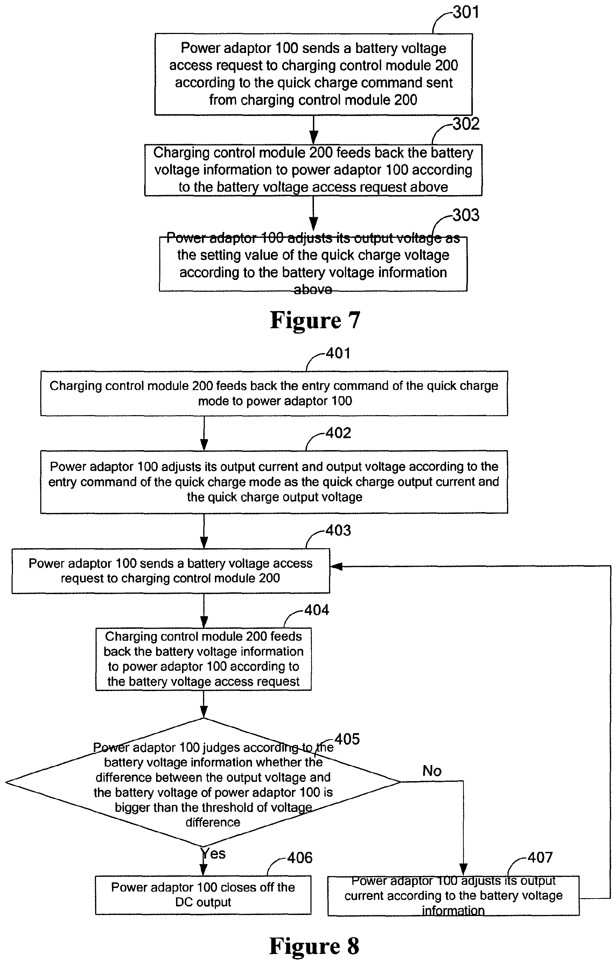

Furthermore, in step S3 as shown in Figure 2 and Figure 3 above, the steps of the power adaptor 100 used to adjust the output voltage according to the battery voltage information fed back from the charging control module 200 comprise the following specific steps (as shown in Figure 7):
S301. The power adaptor 100 sends a battery voltage access request to the charging control module 200 according to the quick charge command sent from the charging control module 200;
S302. The charging control module 200 feeds back the battery voltage information to the power adaptor 100 according to the battery voltage access request above;
S303. The power adaptor 100 adjusts its output voltage as the setting value of the quick charge voltage according to the battery voltage information above.
in at least one embodiment, the setting value of the quick charge voltage may be set as the sum of the battery voltage and the predefined voltage increment (such as 0.2 V). In addition, if in step S302 above, the charging control module 200 does not respond to the battery voltage access request sent from the power adaptor 100, the communication between the power adaptor 100 and the charging control module 200 fails, and the power adaptor 100 carries out reset operation at this moment.

Furthermore, in step S4 as shown in Figure 2 and Figure 3 above, the steps of the power adaptor 100 used to adjust the output current and output voltage to charge the battery 300 according to the quick charge mode comprise the following specific steps (as shown in Figure 8):
S401. The charging control module 200 feeds back the entry instruction of the quick charge mode to the power adaptor 100;
S402. The power adaptor 100 adjusts its output current and output voltage according to the entry instruction of the quick charge mode as the quick charge output current and the quick charge output voltage;
S403. The power adaptor 100 sends a battery voltage access request to the charging control module 200;
S404. The charging control module 200 feeds back the battery voltage information to the power adaptor 100 according to the battery voltage access request;
S405. The power adaptor 100 judges according to the battery voltage information whether the difference between the output voltage and the battery voltage of the power adaptor 100 is bigger than the threshold of voltage difference; if yes, carry out step S406 (it is indicated that the line impedance between the power adaptor 100 and both the charging control module 200 and the battery 300 is abnormal at this moment, and the power adaptor 100 is required to stop outputting direct current), and if not, carry out step S407;
S406. The power adaptor 100 closes off the DC output;
S407. The power adaptor 100 adjusts its output current according to the battery voltage information and returns to carry out step S403 so as to cyclically adjust the output current during the quick charge process of the battery 300, thus optimizing the quick charge process of the battery 300 for the purpose of shortening the charging time.

In at least one embodiment, the quick charge output current above may be set as 4 A, the quick charge output voltage may be set as any value between 3.4 V and 4.8 V, and the threshold of voltage difference may be 0.8 V.

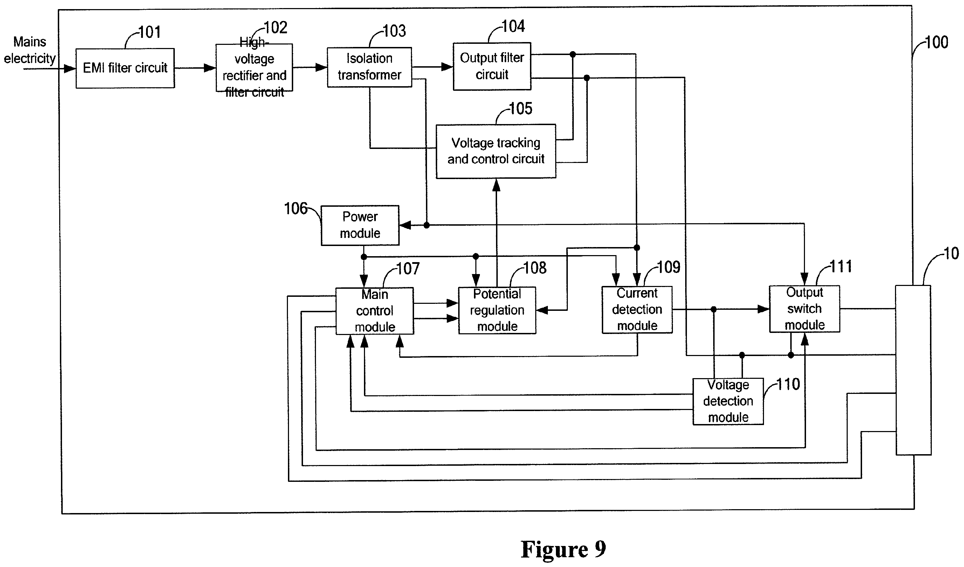

Figure 9 shows an example module which can perform the above battery charging method for illustration, only the portion related to the embodiments of the disclosure is shown, which is described in details as follows:
The power adaptor 100 comprises an EMI filter circuit 101, a high-voltage rectifier and filter circuit 102, an isolation transformer 103, an output filter circuit 104 and a voltage tracking and control circuit 105. Power supply is filtered by the EMI filter circuit 101, and is rectified and filtered by the high-voltage rectifier and filter circuit 102 to output high-voltage direct current. After passing through the isolation transformer 103 for electrical isolation and being output to the output filter circuit 104 to conduct filtering, the high-voltage direct current can be used to charge the battery. The voltage tracking and control circuit 105 adjusts the output voltage of the isolation transformer 103 according to the output voltage of the output filter circuit 104.

The power adaptor 100 further comprises a power module 106, a main control module 107, a potential regulation module 108, a current detection module 109, a voltage detection module 110 and an output switch module 111.

The input terminal of the power module 106 is connected to the secondary terminal of the isolation transformer 103. The power terminal of the main control module 107, the power terminal of the potential regulation module 108, the power terminal of the current detection module 109 are jointly connected to the output terminal of the power module 106. Both the high-potential terminal of the main control module 107 and the high-potential terminal of the potential regulation module 108 are connected to the positive output terminal of the output filter circuit 104. The potential regulation terminal of the potential regulation module 108 is connected to the voltage tracking and control circuit 105. The DC input terminal of the current detection module 109 is connected to the positive output terminal of the output filter circuit 104. The current-feedback terminal of the current detection module 109 is connected to the current detection terminal of the main control module 107. The clock output terminal and data output terminal of the main control module 107 are connected to the clock input terminal and data input terminal of the potential regulation module 108. The first detection terminal and the second detection terminal of the voltage detection module 110 are connected to the DC output terminal of the current detection module 109 and the negative output terminal of the output filter circuit 104, respectively. The first output terminal and the second output terminal of the voltage detection module 110 are connected to the first voltage detection terminal and the second voltage detection terminal of the main control module 107, respectively. The input terminal of the output switch module 111 is connected to the DC output terminal of the current detection module 109; the output terminal of the output switch module 111 is connected to the third detection terminal of the voltage detection module 110. The ground terminal of the output switch module 111 is connected to the negative output terminal of the output filter circuit 104, the controlled terminal and power terminal of the output switch module 111 are connected to the switch control terminal of the main control module 107 and the secondary terminal of the isolation transformer 103, respectively; and the negative output terminal of the output filter circuit 104, the output terminal of the output switch module 111, the first communication terminal and the second communication terminal of the main control module 107 are all connected to the communication interface 10 of the power adaptor 100.

When the power adaptor 100 first charges the battery 300 in a regular charging mode, the main control module 107 controls the output switch module 111 to close off the DC output of the power adaptor 100. The voltage detection module 110 detects the output voltage of the power adaptor 100 and feeds back the voltage detection signal to the main control module 107. According to the voltage detection signal, the main control module 107 judges whether the output voltage of the power adaptor 100 is bigger than the voltage threshold; if yes, the main control module 110 continues to judge the output voltage of the power adaptor 100; if not, the main control module 107 controls the output switch module 111 to turn on the DC output of the power adaptor 100 and drives the voltage tracking and control circuit 105 through the potential regulation module 108 to set the output voltage of the isolation transformer 103 as the regular output voltage; the current detection module 109 detects the output current of the power adaptor 100 and returns the current detection signal to the main control module 107; when according to the current detection signal, the main control module 107 judges that the output current of the power adaptor 100 is within the regular current range over the predefined time intervals, the main control module 107 and the charging control module 200 perform quick charge inquiry communication; after the charging control module 200 sends quick charge instruction command to the main control module 107, the main control module 107 drives, via the battery voltage information fed back from the charging control module 200 and through the potential regulation module 108, the voltage tracking and control circuit 105 to adjust the output voltage of the isolation transformer 103; when the output voltage of the power adaptor 100 meets requirements of the quick charge voltage predefined in the charging control module 200, through the potential regulation module 108, the main control module 107 drives the voltage tracking and control circuit 105 to adjust the output voltage of the isolation transformer 103 to help the power adaptor 100 output direct current on the basis of quick charge output current and quick charge output voltage, and the charging control module 200 simultaneously introduces direct current from the power adaptor 100 for charging the battery 300.

Wherein, when the power adaptor 100 first charges the battery 300 in a regular charging mode, if the output current value of the power adaptor 100 is less than the lower limit of the current (such as 1A), the current detection module 109 continues to detect the output current of the power adaptor 100 and feed the current detection signal back to the main control module 107; if the output current value of the power adaptor 100 is more than the upper limit of the current (such as 4A), the main control module 107 controls the output switch module 111 to close off the DC output of the power adaptor 100 to realize short-circuit protection.

During the quick charge inquiry communication performed by the main control module 107 and the charging control module 200 above, the main control module 107 sends a quick charge inquiry instruction to the charging control module 200, the charging control module 200 judges whether the voltage of the battery 300 reaches the quick charge voltage value via the quick charge inquiry instruction, if yes, feed quick charge command back to the main control module 107, and if not, feed quick rejection command back to the main control module 107.

During the main control module 107 driving the voltage tracking and control circuit 105 to adjust the output voltage of the isolation transformer 103 according to the battery voltage information fed back from the charging control module 200 and through the potential regulation module 108 above, the main control module 107 sends a voltage access request to the charging control module 200 via the quick charge command sent from the charging control module 200, the charging control module 200 feeds back the battery voltage information to the main control module 107 via the battery voltage access request, according to the battery voltage information and through the potential regulation module 108 the main control module 107 drives the voltage tracking and control circuit 105 to adjust the output voltage of the isolation transformer 103 as the above setting value of the quick charge voltage.

When the output voltage of the power adaptor 100 meets requirements of quick charge voltage predefined in the charging control module 200 (namely in the rated range of the quick charge voltage or equal to the rated value of the quick charge voltage), the main control module 107 drives the voltage tracking and control circuit 105 to adjust the output voltage of the isolation transformer 103 through the potential regulation module 108, so the power adaptor 100 outputs direct current on the basis of quick charge output current and quick charge output voltage, and the process of the charging control module 200 simultaneously introducing direct current from the power adaptor 100 to charge the battery 300 is specifically as:
The main control module 107 and the charging control module 200 perform quick charge voltage inquiry communication, and the main control module 107 feeds the output voltage information to the charging control module 200; when the output voltage of the power adaptor 100 is in the rated range of the quick charge voltage or equal to the rated value of the quick charge voltage, the charging control module 200 determines that the output voltage of the power adaptor 100 meets requirements of quick charge voltage predefined in the charging control module 200, and feeds back the entry instruction of the quick charge mode to the main control module 100; according to the entry instruction of the quick charge mode the main control module 107 drives the voltage tracking and control circuit 105 to adjust the output voltage of the isolation transformer 103 such as the power adaptor 100 outputs direct current on the basis of quick charge output current and quick charge output voltage, and the charging control module 200 simultaneously introduces direct current from the power adaptor 100 to charge the battery 300. In addition, when the output voltage of the power adaptor 100 meets requirements of quick charge voltage predefined in the charging control module 200 (namely beyond the rated range of the quick charge voltage or unequal to the rated value of the quick charge voltage), the charging control module 200 sends the feedback signal of the voltage deviation to the main control module 107, the main control module 107 drives the voltage tracking and control circuit 105 to adjust the output voltage of the isolation transformer 103 according to the feedback signal of the voltage deviation and through the potential regulation module 108, and then continues to perform quick charge voltage inquiry communication with the charging control module 200. Specifically, the feedback signal of the voltage deviation comprises the feedback signal of low voltage and the feedback signal of high voltage, if the voltage is low, the main control module 107 drives the voltage tracking and control circuit 105 according to the feedback signal of low voltage and through the potential regulation module 108 to adjust the output voltage of the isolation transformer 103 for higher; if the voltage is high, the main control module 107 drives the voltage tracking and control circuit 105 according to the feedback signal of high voltage and through the potential regulation module 108 to adjust the output voltage of the isolation transformer 103 for lower.

Further, the process of the main control module 107 according to the entry instruction of the quick charge mode and through the potential regulation module 108 driving the voltage tracking and control circuit 105 to adjust the output voltage of the isolation transformer 103 such as the power adaptor 100 outputs direct current on the basis of quick charge output current and quick charge output voltage above is specifically as:
The main control module 107 drives the voltage tracking and control circuit 105 through the potential regulation module 108 to adjust the output voltage of the isolation transformer 103, so that the output current and output voltage of the power adaptor 100 are regulated as quick charge output current (for example, 4A) and quick charge output voltage (any value between 3.4V∼4.8V), the main control module 107 acquires battery voltage information from the charging control module 300 and judges according to the voltage detection information fed back by the voltage detection module 110 whether the difference between the output voltage of the power adaptor 100 and the battery voltage is more than the threshold of voltage difference (for example, 0.8V); if yes, the line impedance among the power adaptor 100 and the charging control module 200 and the battery 300 is shown abnormal, the main control module 107 controls the output switch module 111 to close off the DC output of the power adaptor 100, and if not, the main control module 107 drives the voltage tracking and control circuit 105 according to the battery voltage information and through the potential regulation module 108 to adjust the output voltage of the isolation transformer 103 so as to adjust the output current of the power adaptor 100, and continue to acquire battery voltage information from the charging control module 300, so as to cyclically adjust the output current of the power adaptor 100 during the quick charge process of battery 300, thus optimizing the quick charge process of battery 300 for the purpose of shortening the charging time.

In addition, in the meantime the main control module 107 drives the voltage tracking and control circuit 105 via the potential regulation module 108 to adjust the output voltage of the isolation transformer 103 such as the power adaptor 100 outputs direct current on the basis of quick charge output current and quick charge output voltage, the charging control module 200 detects the voltage of the battery 300; if the voltage of the battery 300 is larger than the quick charge threshold voltage (for example, 4.35V), the charging control module 200 stops to introduce direct current from the power adaptor 100 to charging the battery 300 and feeds the quick charge shutdown command to the main control module 107. Then, the main control module 107 will exit the quick charge model according to the quick charge shutdown command and returns to the regular charging mode.

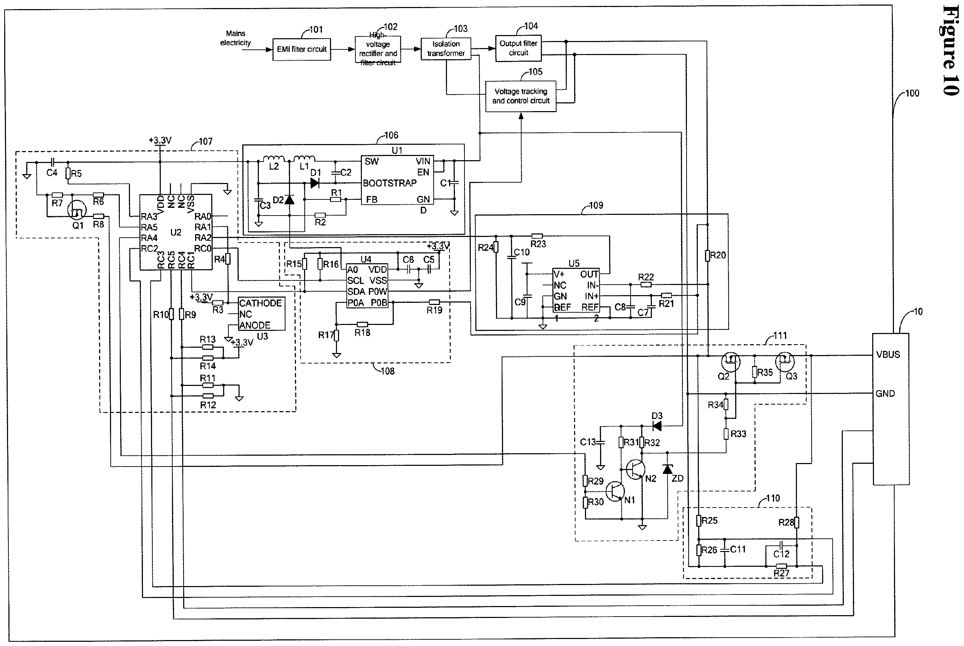

Figure 10 shows an example circuit of the power adaptor in the battery charging apparatus provided by an exemple embodiment of the disclosure, and for illustration purposes, only the portion related to the embodiments of the disclosure is shown, which is described in details as follows.

The power module 106 comprises:
a first capacitor C1, a voltage regulation chip U1, a second capacitor C2, a first inductor LI, a second inductor L2, a first diode D1, a second diode D2, a third capacitor C3, a first resistor R1 and a second resistor R2;
the junction between the first terminal of the first capacitor C1 and both the input power pin Vin and enable pin EN of the voltage regulation chip U1 is the input terminal of the power module 106; the second terminal of the first capacitor C1 and the ground pin GND of the voltage stabilizing chip U1 are jointly grounded; the switch pin SW of the voltage regulation chip U1 and the first terminal of the second capacitor C2 are jointly connected to the first terminal of the first inductor LI; the internal switch pin BOOTSTRAP of the voltage regulation chip U1 and the second terminal of the second capacitor C2 are jointly connected to the cathode of the first diode D1; the feedback voltage pin FB of the voltage regulation chip U1 is connected to the first terminal of the first resistor R1 and the first terminal of the second resistor R2; the second terminal of the first inductor L1 and the cathode of the second diode D2 are jointly connected to the first terminal of the second inductor L2; the junction, formed by jointly connecting the second terminal of the second inductor L2 and the positive electrode of the first diode D1, the second terminal of the first resistor R1 and the first terminal of the third capacitor C3, is the output terminal of the power module 106; the positive electrode of the second diode D2 and the second terminal of the second resistor R2 and the second terminal of the third capacitor C3 are jointly grounded. Wherein, the power module 106 with the voltage regulation chip U1 as the core outputs voltage of +3.3V to supply power for the main control module 107, the potential regulation module 108 and the current detection module 109 after changing the voltage at the secondary terminal of the isolation transformer 103; the voltage regulation chip U1 can be specifically a Model MCP16301 buck-type DC/DC converter.

The main control module 107 comprises:
a main control chip U2, a third resistor R3, a reference voltage chip U3, a fourth resistor R4, a fifth resistor R5, a fourth capacitor C4, a sixth resistor R6, a seventh resistor R7, a first NMOS transistor Q1, an eighth resistor R8, a ninth resistor R9, a tenth resistor R10, an eleventh resistor R11, a twelfth resistor R12, a thirteenth resistor R13 and a fourteenth resistor R14;
the power pin VDD of the main control chip U3 is the power terminal of the main control module 107; the ground pin VSS of the main control chip U3 is grounded; do not connect the first I/O pin RA0 of the main control chip U3; the first terminal of the third resistor R3 is connected to the power pin VDD of the main control chip U3; the second terminal of the third resistor R3 and the first terminal of the fourth resistor R4 are jointly connected to the positive electrode CATHODE of the reference voltage chip U3; the cathode ANODE of the reference voltage chip U3 is grounded; the not connected pin NC of the reference voltage chip U3 is not connected; the second terminal of the fourth resistor R4 is connected to the second I/O pin RA1 of the main control chip U2; the third I/O pin RA2 of the main control chip U2 is the current detection terminal of the main control module 107; the fourth I/O pin RA3 of the main control chip U2 is connected to the first terminal of the fifth resistor R5; the second terminal of the fifth resistor R5 and the first terminal of the fourth capacitor C4 are jointly connected to the power pin VDD of the main control chip U2; the second terminal of the fourth capacitor C4 is grounded; the fifth I/O pin RA4 of the main control chip U2 is the switch control terminal of the main control module 107; the sixth I/O pin RA5 of the main control chip U2 is connected to the first terminal of the sixth resistor R6; the second terminal of the sixth resistor R6 and the grid electrode of the first NMOS transistor Q1 are jointly connected to the first terminal of the seventh resistor R7; the second terminal of the seventh resistor R7 and the source electrode of the first NMOS transistor Q1 are jointly grounded; the drain electrode of the first NMOS transistor Q1 is connected to the first terminal of the eighth resistor R8; the second terminal of the eighth resistor R8 is the high-potential terminal of the main control module 107; the seventh I/O pin RC0 and eighth I/O pin RC1 of the main control chip U2 are the clock output terminal and data output terminal of the main control module 107, respectively; the tenth I/O pin RC3 and ninth I/O pin RC2 of the main control chip U2 are the first voltage detection terminal and the second voltage detection terminal of the main control module 107, respectively; the eleventh I/O pin RC4 and the twelfth I/O pin RC5 of the main control chip U2 are connected to the first terminal of the ninth resistor R9 and the first terminal of the tenth resistor R10, respectively; the first terminal of the eleventh resistor R11 and the first terminal of the twelfth resistor R12 are connected to the second terminal of the ninth resistor R9 and the second terminal of the tenth resistor R10, respectively; the second terminal of the eleventh resistor R11 and the second terminal of the twelfth resistor R12 are jointly grounded; the first terminal of the thirteenth resistor R13 and the first terminal of the fourteenth resistor R14 are connected to the second terminal of the ninth resistor R9 and the second terminal of the tenth resistor R10, respectively; the second terminal of the thirteenth resistor R13 and the second terminal of the fourteenth resistor R14 are jointly connected to the power pin VDD of the main control chip U2; the second terminal of the ninth resistor R9 and the second terminal of the tenth resistor RIO are the first communication terminal and the second communication terminal of the main control module 107, respectively. Wherein, the main control chip U2 can be specifically a microcontroller of PIC12LF1822, PIC12F1822, PIC16LF1823 or PIC 16F1823 Model, the reference voltage chip U3 can be the Model LM4040 voltage reference device.

The potential regulation module 108 comprises:
A fifteenth resistor R15, a sixteenth resistor R16, a digital potentiometer U4, a seventeenth resistor R17, a eighteenth resistor R18, a fifth capacitor C5, a sixth capacitor C6 and a nineteenth resistor R19;
the junction between the first terminal of the fifteenth resistor R15 and the first terminal of the sixteenth resistor R16, the power pin VDD of the digital potentiometer U4 and the first terminal of the fifth capacitor C5 is the power terminal of the potential regulation module 108, the second terminal of the fifth capacitor C5 and the first terminal of the sixth capacitor C6, the ground pin VSS of the digital potentiometer U4 and the first terminal of the seventeenth resistor R17 are jointly grounded, the second terminal of the sixth capacitor C6 is connected to the power pin VDD of the digital potentiometer U4, the junction between the second terminal of the fifteenth resistor R15 and the serial data pin SDA of the digital potentiometer U4 is the data input terminal of the potential regulation module 108, the junction between the second terminal of the sixteenth resistor R16 and the clock input pin SCL of the digital potentiometer U4 is the clock input terminal of the potential regulation module 108, the address zero pin A0 of the digital potentiometer U4 is grounded, the first potential wiring pin P0A of the digital potentiometer U4 and the first terminal of the eighteenth resistor R18 are jointly connected to the second terminal of the seventeenth resistor R17, the second terminal of the eighteenth resistor R18 and the second potential wiring pin P0B of the digital potentiometer U4 are jointly connected to the first terminal of the nineteenth resistor R19, the second terminal of the nineteenth resistor R19 is the high-potential terminal of the potential regulation module 108, and the potential tap pin P0W of the digital potentiometer U4 is the potential regulation terminal of the potential regulation module 108. Wherein the digital potentiometer U4 regulates the internal slide rheostat according to the clock signal and data signal output by the main control chip U2, changing the potential of the tap terminal, namely the potential tap pin P0W of the digital potentiometer U4 inside the slide rheostat, so that the voltage tracking and control circuit 104 regulates the output voltage of the isolation transformer 103 with the potential change; the digital potentiometer U4 can be specifically a MCP45X1 digital potentiometer.

The current detection module 109 comprises:
a twentieth resistor R20, a twenty-first resistor R21, a twenty-second resistor R22, a seventh capacitor C7, an eighth capacitor C8, a current detection chip U5, a twenty-third resistor R23, a ninth capacitor C9, a tenth capacitor C10 and a twenty-fourth resistor R24;
the first terminal and the second terminal of the twentieth resistor R20 are the DC input terminal and DC output terminal of the current detection module 109, respectively; the first terminal of the twenty-first resistor R21 and the first terminal of the twenty-second resistor R22 are connected to the first terminal and second terminal of the twentieth resistor R20, respectively; the second terminal of the twenty-first resistor R21 and the first terminal of the seventh capacitor C7 are jointly connected to the input positive pin IN+ of the current detection chip U5, the second terminal of the twenty-second resistor R22 and the first terminal of the eighth capacitor C8 are jointly connected to the input negative pin IN- of the current detection chip U5, the junction between the power pin V+ of the current detection chip U5 and the first terminal of the ninth capacitor C9 is the power terminal of the current detection module 109, the idle pin NC of the current detection chip U5 is not connected, the output pin OUT of the current detection chip U5 is connected to the first terminal of the twenty-third resistor R23, the second terminal of the twenty-third resistor R23 is the current-feedback terminal of the current detection module 109, the first terminal of the tenth capacitor C10 and the first terminal of the twenty-fourth resistor R24 are jointly connected to the second terminal of the twenty-third resistor R23, the second terminal of the seventh capacitor C7 and the second terminal of the ninth capacitor C9, the second terminal of the tenth capacitor C10, the second terminal of the twenty-fourth resistor R24, the ground pin GND, the first reference voltage pin REF1 and the second reference voltage pin REF2 of the current detection chip U5 are jointly grounded. Wherein the twentieth resistor R20 as a sense resistor samples the output current, namely the output current of the power adaptor 100, of the output filter circuit 104, then according to the current detection chip U5 outputs a current detection signal according to the voltage on both ends of the twentieth resistor R20 to the main control chip U2; the current detection chip U5 can specifically be a INA286 Model current shunt monitor.

The voltage detection module 110 comprises:
a twenty-fifth resistor 25, a twenty-sixth resistor R26, a eleventh capacitor C11, a twelfth capacitor C12, a twenty-seventh resistor R27 and a twenty-eighth resistor R28;
the first terminal of the twenty-fifth resistor R25 is the first detection terminal of the voltage detection module 110; the junction between the second terminal of the twenty-fifth resistor R25 and both the first terminal of the twenty-sixth resistor R26 and the first terminal of the eleventh capacitor C11 is the second output terminal of the voltage detection module 110; the second terminal of the twenty-sixth resistor R26 is the second detection terminal of the voltage detection module 110; the second terminal of the eleventh capacitor C11 and both the first terminal of the twelfth capacitor C12 and the first terminal of the twenty-seventh resistor R27 are jointly connected to the second terminal of the twenty-sixth resistor R26; the junction between the second terminal of the twelfth capacitor C12 and both the second terminal of the twenty-seventh resistor R27 and the first terminal of the twenty-eighth resistor R28 is the first output terminal of the voltage detection module 110; the second terminal of the twenty-eighth resistor R28 is the third detection terminal of the voltage detection module 110.

The output switch module 111 comprises:
a twenty-ninth resistor R29, a thirtieth resistor R30, a thirteenth capacitor C13, a thirty-first resistor R31, a first NPN-type triode N1, a thirty-second resistor R32, a second NPN-type triode N2, a third diode D3, an voltage stabilizing diode ZD, a thirty-third resistor R33, a thirty-fourth resistor R34, a thirty-fifth resistor R35, a second NMOS transistor Q2 and a third NMOS transistor Q3;
the first terminal of the twenty-ninth resistor R29 is the controlled terminal of the output switch module 111, the second terminal of the twenty-ninth resistor R29 and the first terminal of the thirtieth resistor R30 are jointly connected to the base electrode of the first NPN-type triode N1, the first terminal of the thirteenth capacitor C13 and the first terminal of the thirty-first resistor R31, the first terminal of the thirty-second resistor R32 are jointly connected to the cathode of the third diode D3, the positive electrode of the third diode D3 is the power terminal of the output switch module 111, the second terminal of the thirty-first resistor R31 and the base electrode of the second NPN-type triode N2 are jointly connected to the collector electrode of the first NPN-type triode N1, the second terminal of the thirty-second resistor R32, the cathode of the stabilizing diode ZD and the first terminal of the thirty-third resistor R33 are jointly connected to the collector electrode of the second NPN-type triode N2, the second terminal of the thirtieth resistor R30, the second terminal of the thirteenth capacitor C13, the emitter electrode of the first NPN-type triode N1, the emitter electrode of the second NPN-type triode N2 and the positive electrode of the voltage stabilizing diode ZD are jointly grounded, the second terminal of the thirty-third resistor R33 and the first terminal of the thirty-fourth resistor R34, the first terminal of the thirty-fifth resistor R35, the grid electrode of the second NMOS transistor Q2 and the grid electrode of the third NMOS transistor Q3 are jointly connected, the second terminal of the thirty-fourth resistor R34 is the ground terminal of the output switch module 111, the grid electrode of the second NMOS transistor Q2 is the input terminal of the output switch module 111, the drain electrode of the second NMOS transistor Q2 and the second terminal of the thirty-fifth resistor R35 are jointly connected to the source electrode of the third NMOS transistor Q3, the drain electrode of the third NMOS transistor Q3 is the output terminal of the output switch module 111. Wherein the second NMOS transistor Q2 and the third NMOS transistor Q3 turn on or off simultaneously to open or close the DC output of the power adaptor 100.

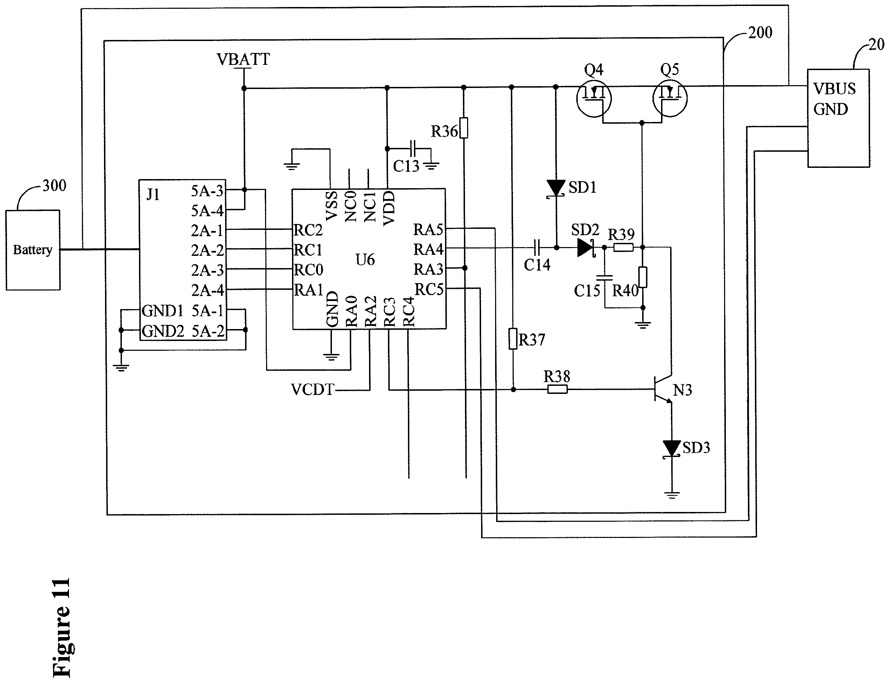

Figure 11 shows an example circuit structure of the charging control module in the battery charging apparatus provided by the embodiments of the disclosure, and for illustration purposes, only the portion related to the embodiments of the disclosure is shown, which is described in details as follows.

The charging control module 200 comprises:
a charger connector J1, a master controller U6, a thirteenth capacitor C13, a thirty-sixth resistor R36, a thirty-seventh resistor R37, a fourteenth capacitor C14, a first Schottky diode SD1, a second Schottky diode SD2, a fifteenth capacitor C15, a thirty-eighth resistor R38, a thirty-ninth resistor R39, a fortieth resistor R40, a third NPN-type triode N3, a fourth NMOS transistor Q4 and a fifth NMOS transistor Q5;
the charger connector J1 is connected to electrodes of the battery 300; the first pin 5A-1 and the second pin 5A-2 of the charger connector J1 are jointly grounded; the first ground pin GND1 and the second ground pin GND2 of the charger connector J1 are jointly grounded; the first I/O pin RA0 of the master controller U6 is connected to the seventh pin 5A-3 and the eighth pin 5A-4 of the charger connector J1; the second I/O pin RA1, the seventh I/O pin RC0, the eighth I/O pin RC1 and the ninth I/O pin RC2 of the master controller U6 are connected to the sixth pin 2A-4, the fifth pin 2A-3, the fourth pin 2A-2, the third pin 2A-1 of the charger connector J1, respectively; both the analog ground pin VSS and ground pin GND of the master controller U6 are grounded; both the first not connected pin NC0 and the second not connected pin NC1 of the master controller U6 are grounded; both the power pin VDD of the master controller U6 and the first terminal of the thirteenth capacitor C13 are jointly connected to the seventh pin 5A-3 and the eighth pin 5A-4 of the charger connector J1; the fourth I/O pin RA3 of the master controller U6 and the eleventh I/O pin RC4 carry out data communication with electronic equipment; the thirty-sixth resistor R36 is connected between the fourth I/O pin RA3 and the power pin VDD of the master controller U6; the sixth I/O pin RA5 and twelfth I/O pin RC5 of the master controller U6 are connected to the first communication terminal and the second communication terminal of main control module 107 in the power adaptor 100, respectively; the first terminal of the thirty-seventh resistor R37 and the first terminal of the thirty-eighth resistor R38 are jointly connected to the tenth I/O terminal RC3 of the master controller U6; the second terminal of the thirty-seventh resistor R37 is connected to the power pin VDD of the master controller U6; the second terminal of the thirty-eighth resistor R38 is connected to the base electrode of the third NPN-type triode N3; the fifth I/O terminal RA4 of the master controller U6 is connected to the first terminal of the fourteenth capacitor C14; the second terminal of the fourteenth capacitor C14 and the cathode of the first Schottky diode SD1 are jointly connected to the positive electrode of the second Schottky diode SD2; the first terminal of the thirty-ninth resistor R39 and the first terminal of the fifteenth capacitor C15 are jointly connected to the cathode of the second Schottky diode SD2; the second terminal of the thirty-ninth resistor R39, the first terminal of the fortieth resistor R40 and the collector electrode of the third NPN-type triode N3 are connected to the grid electrode of the fourth NMOS transistor Q4 and the grid electrode of the fifth NMOS transistor Q5; the second terminal of the fortieth resistor R40 and the second terminal of the fifteenth capacitor C15 are jointly grounded; the source electrode of the fourth NMOS transistor Q4 is connected to the positive electrode of the first Schottky diode SD1, and further connected with the seventh pin 5A-3 and the eighth pin 5A-4 of the charger connector J1; the drain electrode of the fourth NMOS transistor Q4 is connected to the drain electrode of the fifth NMOS transistor Q5; the source electrode of the fifth NMOS transistor Q5 is connected with the power cable VBUS of communication interface 10 of the power adaptor 100; the emitter electrode of the third NPN-type triode N3 is connected to the positive electrode of the third Schottky diode SD3; the cathode of the third Schottky diode SD3 is grounded. Wherein, the master controller U6 can be a microcontroller of PIC12LF1501, PIC12F1501, PIC16LF1503, PIC16F1503, PIC16LF1507, PIC16F1507, PIC16LF1508, PIC16F1508, PIC16LF1509 or PIC16F1509 Model.

When the power adaptor 100 is operating at the quick charge mode, the charging control module 200 introduces direct current from the power adaptor 100 to charge the battery 300, the master controller U6 outputs control signal via the fifth I/O pin RA4 thereof to control the turn-on of the fourth NMOS transistor Q4 and the fifth transistor Q5, and via the tenth I/O pin RC3 thereof to control the turn-off of the third NPN-type triode N3, thus introducing direct current from the communication interface 10 of the power adaptor 100 to charge the battery 300, since the battery 300 itself has obtained direct current from the power adaptor 100, by introducing direct current the charging control module 200 can play a part in larger charging current for battery 300, thus realizing quick charge for battery 300; conversely, when the battery 300 needs to be regularly charged, the master controller U6 outputs low electrical level through the fifth I/O pin RA4 thereof to control the turn-off of the fourth NMOS transistor Q4 and the fifth NMOS transistor Q5, and outputs high electrical level through the tenth I/O pin RC3 thereof to control the turn-on of the third NPN-type transistor N3.

The master controller U6 performs data communication via the fourth I/O pin RA3 and eleventh I/O pin RC4 thereof with electronic equipment, when the power supply member of the electronic equipment is the battery 300, specifically, the master controller U6 can transmit voltage and power information of the battery 300 to the electronic equipment (such as mobile phones), and also the master controller U6 can judge whether the battery 300 has completed the quick charge process based on the voltage thereof, if completed, a quick charge turn-off command can be fed for the electronic equipment to switch the quick charge mode to the regular charging mode; during the power adaptor 100 charging the battery 300, if suddenly the power adaptor 100 and the battery 300 disconnect, the master controller U6 via the battery connector J1 detects the voltage of battery 300 and feeds a charging termination instruction to the electronic equipment to terminate the charging process for the battery 300; in addition, if the electronic equipment can detect the temperature of the battery 300, and reports to the master controller U6 at a temperature abnormality to turn off the fourth NMOS transistor Q4 and fifth NMOS Q5, to stop quick charge the battery 300, meanwhile the electronic equipment switch the charge mode from quick charge to regular charging.

In addition, when the power adaptor 100 is operating at a quick charge mode and the charging control module 200 introduces direct current from the power adaptor 100 to charge the battery 300, if the power cable VBUS and the ground cable GND of the communication interface 10 of the power adaptor 100 are reversely connected to the power cable VBUS and ground cable GND of communication interface 20 of the electronic equipment (that is the power cable VBUS and ground cable GND of communication interface 10 of the power adaptor 100 are respectively connected with the ground of the charging control module 200 and the source electrode of the fifth NMOS transistor Q5), direct current will be introduced from the ground of the charging control module 200, and the source electrode of the fifth NMOS transistor Q5 is connected to ground.

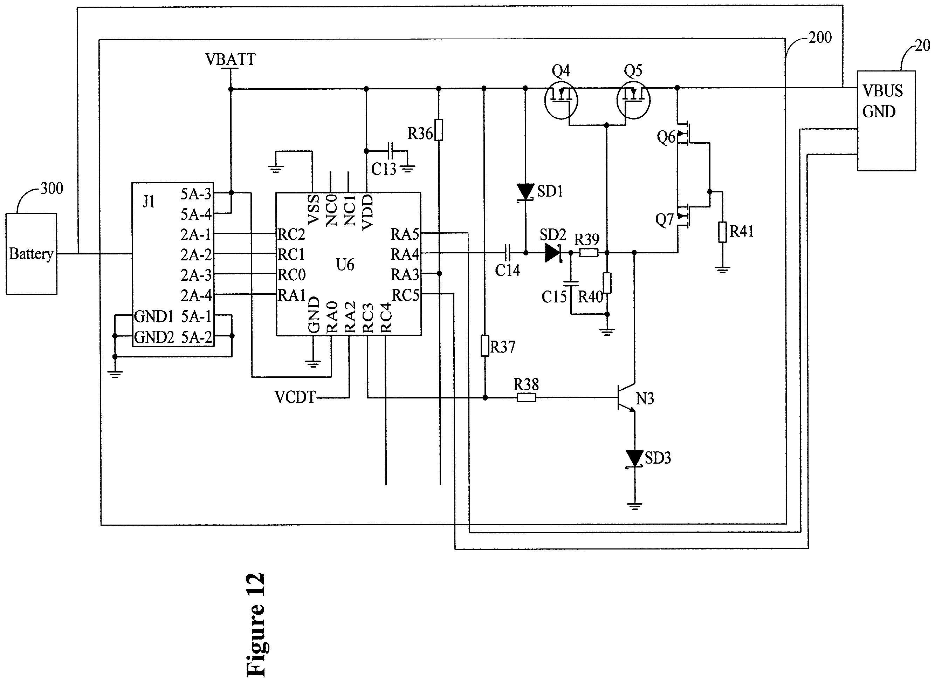

As shown in Figure 12, to avoid damage to components, the charging control module 200 further comprises the sixth NMOS transistor Q6, the seventh NMOS transistor Q7 and the forty-first resistor R41. The source electrode of the sixth NMOS transistor Q6 is connected to the source electrode of the fifth NMOS transistor Q5, the drain electrode of the sixth NMOS transistor Q6 is connected to the drain electrode of the seventh NMOS transistor Q7, the source electrode of the seventh NMOS transistor Q7 is connected to the collector electrode of the third NPN-type triode N3, the grid electrodes of both the sixth NMOS transistor Q6 and the seventh NMOS transistor Q7 are connected with the first terminal of the forty-first resistor R41, and the second terminal of the forty-first resistor R41 is grounded.

The second terminal of the forty-first resistor R41 is connected to direct current from the ground to drive the turn-off of the sixth NMOS transistor Q6 R41 NMOS Q6 and the seventh NMOS transistor Q7 with the above reverse connection, so that the direct current from the ground into the charging control module 200 cannot form a circuit 200 to protect the components in the charging control module 200 from damage.

In conclusion, the embodiments of the disclosure adopts a battery charging apparatus which comprises a power adaptor 100 and a charging control module 200; during charging the battery 300, the power adaptor 100 first charges the battery in a regular charging mode; when the output current value of the power adaptor is within the regular current range over the predefined time intervals, the power adaptor and the charging control module perform quick charge inquiry communication; after the charging control module sends a quick charge command to the power adaptor, the power adaptor adjusts the output voltage according to the battery voltage information fed back by the charging control module; when such output voltage meets requirements of quick charge voltage predefined in the charging control module, the power adaptor adjusts the output current and output voltage according to the quick charge mode to charge the battery, and the charging control module simultaneously introduces direct current from the power adaptor to charge the battery, thus realizing quick charge for battery to reduce the charging time.

## Claims

1. A power adaptor (100) comprising a communication interface (10) and being configured to charge via its communication interface (10) a battery (300) of an electronic equipment,
and wherein, during charging said battery (300),
- said power adaptor (100) is configured to first charge said battery (300) in a regular charge mode;
- when the output current value of said power adaptor (100) falls within a regular current range, said power adaptor (100) is configured to perform a quick charge inquiry communication; and
- after a quick charge command is received, said power adaptor (100) is configured to adjust the output current and output voltage to charge said battery according to a quick charge mode in which a charging time for the battery is reduced relative to said regular charge mode.

2. The power adaptor of claim 1, wherein said power adaptor is configured to detect and judge its output current and, if the output current value of said power adaptor is more than an upper limit of the current, to close off the output.

3. The power adaptor of claim 1 or 2, wherein said power adaptor is configured to perform a quick charge voltage inquiry communication and to feed back the output voltage information.

4. The power adaptor of any one of claims 1 to 3, wherein said power adaptor is configured to detect and judge, under the circumstance that direct current, DC, output is turned off, whether the voltage of said communication interface is higher than a voltage threshold, and, if the voltage of said communication interface is not higher than the voltage threshold, then to output a direct current according to predefined regular output voltage.

5. The power adaptor of any one of claims 1 to 4, wherein the power adapter comprises an EMI filter circuit, a high-voltage rectifier and filter circuit, an isolation transformer, an output filter circuit and a voltage tracking and controlling circuit; after EMI of mains electricity is filtered by the EMI filter circuit, the high-voltage rectifier and filter circuit conducts a rectifying and filtering process to output a high-voltage direct current, after passing through the isolation transformer for an electrical isolation, the high-voltage direct current is outputted to the output filter circuit for being filtered and used to charge the battery, and the voltage tracking and controlling circuit adjusts an output voltage of the isolation transformer according to an output voltage of the output filter circuit

6. A battery charging apparatus comprising a power adaptor (100) according to any one of claims 1 to 5.

7. A method for charging a battery comprising the steps of:
- during charging the battery, first charging said battery in a regular charge mode using a power adaptor;
- when the output current value of said power adaptor falls within a regular current range, performing a quick charge inquiry communication; and
- after receiving a quick charge command, adjusting the output current and output voltage to charge said battery according to a quick charge mode in which a charging time for the battery is reduced relative to said regular charge mode.

8. The method of claim 7, further comprising the steps of:
- detecting and judging, by said power adaptor, its output current;
- when the output current value of said power adaptor is more than an upper limit of the current, closing off, by said power adaptor, the DC output.

9. The method of claim 7 or 8, further comprising the steps of:
- performing, by said power adaptor, quick charge voltage inquiry communication and feeding back the output voltage information;
- judging, according to said output voltage information, whether the output voltage of said power adaptor meets requirements of quick charge voltage predefined.

10. The method of claim 9, further comprising the steps of:
- when the output voltage of said power adaptor does not meet requirements of quick charge voltage, sending the feedback signal of the voltage deviation to said power adaptor;
- adjusting, by said power adaptor, its output voltage according to said feedback signal of the voltage deviation.

11. The method of any one of claims 7 to 10, further comprising the steps of:
- detecting the voltage of said battery and judging whether the voltage of said battery is bigger than the quick charge threshold voltage;
- if the voltage of said battery is bigger than the quick charge threshold voltage, then stopping the introducing of the direct current from said power adaptor to charge said battery and feeds back the quick charge shutdown command to said power adaptor;
- exiting, by said power adaptor, from the quick charge mode according to said quick charge shutdown command.

12. The method of any one of claims 7 to 11, further comprising the steps of:
- detecting and judging, by said power adaptor and under the circumstance that DC output is turned off, whether the voltage of said communication interface is bigger than the voltage threshold;
- if the voltage of said communication interface is not bigger than the voltage threshold, then outputting, by said power adaptor a direct current.

13. The method of any one of claims 7 to 12, comprising the steps of:
- sending, by said power adaptor, quick charge inquiry instruction;
- judging whether the voltage of said battery reaches the quick charge voltage value according to said quick charge inquiry instruction;
- if the voltage of said battery reaches the quick charge voltage value, then feeding back a quick charge command to said power adaptor;
- if the voltage of said battery does not reach the quick charge voltage value, then feeding back a quick charge rejection command to said power adaptor;

14. The method of any one of claims 7 to 13, further comprising the steps of:
- sending, by said power adaptor, a battery voltage access request according to the quick charge command;
- feeding back the battery voltage information to said power adaptor according to said battery voltage access request;
- adjusting, by said power adaptor, its output voltage as the setting value of the quick charge voltage according to the voltage information of said battery.

15. The method of any one of claims 7 to 14, further comprising the steps of:
- feeding back the entry instruction of the quick charge mode to said power adaptor;
- adjusting, by said power adaptor, its output current and output voltage according to said entry instruction of the quick charge mode as the quick charge output current and the quick charge output voltage;
- sending, by said power adaptor, a battery voltage access request;
- feeding back the battery voltage information to said power adaptor according to said battery voltage access request;
- judging, by said power adaptor and according to the voltage information of said battery, whether the difference between the output voltage of said power adaptor and the voltage of the battery is bigger than the threshold of voltage difference;
- if the difference between the output voltage of said power adaptor and the voltage of the battery is bigger than the threshold of voltage difference, then closing off, by said power adaptor, the DC output; and
- if difference between the output voltage of said power adaptor and the voltage of the battery is not bigger than the threshold of voltage difference adjusting, by said power adaptor and according to the voltage information of said battery, its output current.

## Patentansprüche

1. Stromadapter (100), der eine Kommunikationsschnittstelle (10) umfasst und konfiguriert ist, über seine Kommunikationsschnittstelle (10) eine Batterie (300) eines elektronischen Geräts zu laden,
und wobei während des Ladens der Batterie (300),
- der Stromadapter (100) konfiguriert ist, zuerst die Batterie (300) in einem regulären Ladungsmodus zu laden;
- wenn der Ausgangsstromwert des Stromadapters (100) in einen regulären Strombereich fällt, der Stromadapter (100) konfiguriert ist, eine Schnellladeabfragekommunikation durchzuführen; und
- nachdem ein Schnellladebefehl empfangen ist, der Stromadapter (100) konfiguriert ist, den Ausgangsstrom und die Ausgangsspannung einzustellen, um die Batterie gemäß einem Schnelllademodus zu laden, in dem eine Ladezeit für die Batterie gegenüber dem regulären Lademodus reduziert ist.

2. Stromadapter nach Anspruch 1, wobei der Stromadapter konfiguriert ist, seinen Ausgangsstrom zu erfassen und zu beurteilen und, falls der Ausgangsstromwert des Stromadapters mehr als eine Obergrenze des Stroms ist, den Ausgang auszuschalten.

3. Stromadapter nach Anspruch 1 oder 2, wobei der Stromadapter konfiguriert ist, eine Schnellladespannungsabfragekommunikation durchzuführen und die Ausgangsspannungsinformationen zurückzukoppeln.

4. Stromadapter nach einem der Ansprüche 1 bis 3, wobei der Stromadapter konfiguriert ist, unter dem Umstand, dass Gleichstrom-, DC, -Ausgang ausgeschalten ist, zu erfassen und zu beurteilen, ob die Spannung der Kommunikationsschnittstelle höher als ein Spannungsschwellenwert ist und, falls die Spannung der Kommunikationsschnittstelle nicht höher als der Spannungsschwellenwert ist, dann einen Gleichstrom gemäß einer vordefinierten regulären Ausgangsspannung auszugeben.

5. Stromadapter nach einem der Ansprüche 1 bis 4, wobei der Stromadapter eine EMI-Filterschaltung, eine Hochspannungsgleichrichter- und Filterschaltung, einen Isolationstransformator, eine Ausgangsfilterschaltung und eine Spannungsverfolgungs- und Steuerschaltung umfasst; wobei, nachdem die EMI von Netzstrom durch die EMI-Filterschaltung gefiltert ist, der Hochspannungsgleichrichter- und Filterschaltung einen Gleichrichtungs- und Filterungsprozess durchführt, um einen Hochspannungsgleichstrom auszugeben, wobei, nach Passieren des Isolationstransformators zur elektrischen Isolation, der Hochspannungsgleichstrom an die Ausgangsfilterschaltung ausgegeben wird, um gefiltert und zum Laden der Batterie verwendet zu werden, und die Spannungsverfolgungs- und Steuerschaltung eine Ausgangsspannung des Isolationstransformators gemäß einer Ausgangsspannung der Ausgangsfilterschaltung einstellt.

6. Batterieladevorrichtung, umfassend einen Stromadapter (100) nach einem der Ansprüche 1 bis 5.

7. Verfahren zum Laden einer Batterie, umfassend die Schritte:
- während eines Ladens der Batterie, zuerst Laden der Batterie in einem regulären Lademodus unter Verwendung eines Stromadapters;
- wenn der Ausgangsstromwert des Stromadapters in einem regulären Strombereich liegt, Durchführen einer Schnellladeabfragekommunikation; und
- nachdem ein Schnellladebefehl empfangen wurde, Einstellen des Ausgangsstroms und der Ausgangsspannung, um die Batterie gemäß einem Schnelllademodus zu laden, in dem eine Ladezeit für die Batterie gegenüber dem regulären Lademodus reduziert ist.

8. Verfahren nach Anspruch 7, weiter umfassend die Schritte:
- Erfassen und Beurteilen, durch den Stromadapter, seines Ausgangsstroms;
- wenn der Ausgangsstromwert des Stromadapters mehr als eine Obergrenze des Stroms ist, Ausschalten, durch den Stromadapter, des DC-Ausgangs.

9. Verfahren nach Anspruch 7 oder 8, weiter umfassend die Schritte:
- Durchführen, durch den Stromadapter, von Schnellladespannungsabfragekommunikation und Rückkoppeln der Ausgabespannungsinformationen;
- Beurteilen, gemäß den Ausgabespannungsinformationen, ob die Ausgangsspannung des Stromadapters die Anforderungen der vordefinierten Schnellladespannung erfüllt.

10. Verfahren nach Anspruch 9, weiter umfassend die Schritte zum:
- wenn die Ausgangsspannung des Stromadapters nicht die Anforderungen der Schnellladespannung erfüllt, Senden des Rückkopplungssignals der Spannungsabweichung an den Stromadapter;
- Einstellen, durch den Stromadapter, seiner Ausgangsspannung gemäß dem Rückkopplungssignal der Spannungsabweichung.

11. Verfahren nach einem der Ansprüche 7 bis 10, weiter umfassend die Schritte:
- Erfassen der Spannung der Batterie und Beurteilen ob die Spannung der Batterie größer als die Schnellladeschwellenspannung ist;
- falls die Spannung der Batterie größer als die Schnellladeschwellenspannung ist, dann Stoppen der Einführung des Gleichstroms aus dem Stromadapter, um die Batterie zu laden, und Rückkoppeln des Schnellladeabschaltbefehls an den Stromadapter;
- Austreten, durch den Stromadapter, aus dem Schnelllademodus gemäß dem Schnellladeabschaltbefehl.

12. Verfahren nach einem der Ansprüche 7 bis 11, weiter umfassend die Schritte:
- Erfassen und Beurteilen, durch den Stromadapter und unter der Bedingung, dass der DC-Ausgang ausgeschaltet ist, ob die Spannung der Kommunikationsschnittstelle größer als der Spannungsschwellenwert ist;
- falls die Spannung der Kommunikationsschnittstelle nicht größer als der Spannungsschwellenwert ist, dann Ausgeben, durch den Stromadapter, eines Gleichstroms.

13. Verfahren nach einem der Ansprüche 7 bis 12, umfassend die Schritte:
- Senden, durch den Stromadapter, einer Schnellladeabfrageanweisung;
- Beurteilen, ob die Spannung der Batterie den Schnellladespannungswert gemäß der Schnellladeabfrageanweisung erreicht;
- falls die Spannung der Batterie den Schnellladespannungswert erreicht, dann Rückkoppeln eines Schnellladebefehls an den Stromadapter;
- falls die Spannung der Batterie den Schnellladespannungswert nicht erreicht, dann Rückkoppeln eines Schnellladezurückweisungsbefehls an den Stromadapter.

14. Verfahren nach einem der Ansprüche 7 bis 13, weiter umfassend die Schritte:
- Senden, durch den Stromadapter, einer Batteriespannungszugriffsanfrage gemäß dem Schnellladebefehl;
- Rückkoppeln, der Batteriespannungsinformationen an den Stromadapter gemäß der Batteriespannungszugriffsanfrage;
- Einstellen, durch den Stromadapter, seiner Ausgangsspannung als den Einstellwert der Schnellladespannung gemäß den Spannungsinformationen der Batterie.

15. Verfahren nach einem der Ansprüche 7 bis 14, weiter umfassend die Schritte:
- Rückkoppeln der Eintrittsanweisung des Schnelllademodus an den Stromadapter:
- Einstellen, durch den Stromadapter, seines Ausgangsstroms und seiner Ausgangsspannung gemäß der Eintrittsanweisung des Schnelllademodus als den Schnellladeausgangsstrom und die Schnellladeausgangsspannung;
- Senden, durch den Stromadapter, einer Batteriespannungszugriffsanfrage;
- Rückkoppeln der Batteriespannungsinformationen an den Stromadapter gemäß der Batteriespannungszugriffsanfrage;
- Beurteilen, durch den Stromadapter und gemäß den Spannungsinformationen der Batterie, ob die Differenz zwischen der Ausgangsspannung des Stromadapters und der Spannung der Batterie größer als der Schwellenwert der Spannungsdifferenz ist;
- falls die Differenz zwischen der Ausgangsspannung des Stromadapters und der Spannung der Batterie größer als der Schwellenwert der Spannungsdifferenz ist, dann Ausschalten, durch den Stromadapter, des DC-Ausgangs; und
- falls eine Differenz zwischen der Ausgangsspannung des Stromadapters und der Spannung der Batterie nicht größer als der Schwellenwert der Spannungsdifferenz ist, Einstellen, durch den Stromadapter und gemäß den Spannungsinformationen der Batterie, seines Ausgangsstroms.

## Revendications

1. Adaptateur d'alimentation électrique (100) comprenant une interface de communication (10) et étant configuré pour charger via son interface de communication (10) une batterie (300) d'un équipement électronique,
et dans lequel, pendant le chargement de ladite batterie (300),
- ledit adaptateur d'alimentation électrique (100) est configuré pour d'abord charger ladite batterie (300) dans un mode de charge habituel ;
- quand la valeur de courant de sortie dudit adaptateur d'alimentation électrique (100) tombe dans une plage de courant habituelle, ledit adaptateur d'alimentation électrique (100) est configuré pour effectuer une communication de demande de charge rapide ; et
- après qu'une instruction de charge rapide a été reçue, ledit adaptateur d'alimentation électrique (100) est configuré pour ajuster le courant de sortie et la tension de sortie afin de charger ladite batterie en fonction d'un mode de charge rapide dans lequel un temps de charge de la batterie est réduit par rapport audit mode de charge habituel.

2. Adaptateur d'alimentation électrique selon la revendication 1, dans lequel ledit adaptateur d'alimentation électrique est configuré pour détecter et juger son courant de sortie et, si la valeur de courant de sortie dudit adaptateur d'alimentation électrique est plus grande qu'une limite supérieure du courant, pour fermer la sortie.

3. Adaptateur d'alimentation électrique selon la revendication 1 ou 2, dans lequel ledit adaptateur d'alimentation électrique est configuré pour effectuer une communication de demande de tension de charge rapide et pour renvoyer les informations de tension de sortie.

4. Adaptateur d'alimentation électrique selon l'une quelconque des revendications 1 à 3, dans lequel ledit adaptateur d'alimentation électrique est configuré pour détecter et juger, dans le cas où la sortie de courant continu, CC, est désactivée, si la tension de ladite interface de communication est plus grande qu'un seuil de tension, et, si la tension de ladite interface de communication n'est pas plus grande que le seuil de tension, sortir un courant continu selon une tension de sortie régulière prédéfinie.

5. Adaptateur d'alimentation électrique selon l'une quelconque des revendications 1 à 4, dans lequel l'adaptateur d'alimentation électrique comprend un circuit de filtrage EMI, un circuit de filtrage et de redressement haute-tension, un transformateur d'isolation, un circuit de filtrage de sortie et un circuit de commande et de suivi de tension ; après que l'EMI d'électricité de réseau a été filtrée par ledit circuit de filtrage d'EMI, le circuit de filtrage et de redressement haute-tension mène un processus de redressement et de filtrage pour sortir un courant continu haute tension, après avoir traversé le transformateur d'isolation pour une isolation électrique, le courant continu haute tension est sorti vers le circuit de filtrage de sortie pour être filtré et utilisé pour charger la batterie, et le circuit de commande et de suivi de tension ajuste une tension de sortie du transformateur d'isolation en fonction de la tension de sortie du circuit de filtrage de sortie.

6. Appareil de charge de batterie comprenant un adaptateur d'alimentation électrique (100) selon l'une quelconque des revendications 1 à 5.

7. Procédé pour charger une batterie comprenant les étapes consistant à :
- durant la charge de la batterie, d'abord charger ladite batterie dans un mode de charge habituel en utilisant un adaptateur d'alimentation électrique ;
- quand la valeur de courant de sortie dudit adaptateur d'alimentation électrique se trouve dans une plage de courant habituelle, effectuer une communication de demande de charge rapide ; et
- après qu'une instruction de charge rapide a été reçue, ajuster le courant de sortie et la tension de sortie afin de charger ladite batterie en fonction d'un mode de charge rapide dans lequel un temps de charge pour la batterie est réduit par rapport audit mode de charge habituel.

8. Procédé selon la revendication 7, comprenant en outre les étapes consistant à :
- détecter et juger, par ledit adaptateur d'alimentation électrique, son courant de sortie ;
- quand la valeur de courant de sortie dudit adaptateur d'alimentation électrique est supérieure à une limite supérieure du courant, fermer, par ledit adaptateur d'alimentation électrique, la sortie CC.

9. Procédé selon la revendication 7 ou 8, comprenant en outre les étapes consistant à :
- effectuer, par ledit adaptateur d'alimentation électrique, une communication de demande de tension de charge rapide et renvoyer les informations de tension de sortie ;
- juger, en fonction desdites informations de tension de sortie, si la tension de sortie dudit adaptateur d'alimentation électrique répond à des exigences de tension de charge rapide prédéfinies.

10. Procédé selon la revendication 9, comprenant en outre les étapes consistant à :
- quand la tension de sortie dudit adaptateur d'alimentation électrique ne répond pas à des exigences de tension de charge rapide, envoyer le signal de renvoi de l'écart de tension audit adaptateur d'alimentation électrique ;
- ajuster, par ledit adaptateur d'alimentation électrique, sa tension de sortie en fonction dudit signal de renvoi de l'écart de tension.

11. Procédé selon l'une quelconque des revendications 7 à 10, comprenant en outre les étapes consistant à :
- détecter la tension de ladite batterie et juger si la tension de ladite batterie est plus importante que la tension de seuil de charge rapide ;
- si la tension de ladite batterie est plus importante que la tension de seuil de charge rapide, alors arrêter l'introduction du courant continu depuis ledit adaptateur d'alimentation électrique afin de charger ladite batterie et renvoyer l'instruction d'interruption de charge rapide audit adaptateur d'alimentation électrique ;
- sortir, par ledit adaptateur d'alimentation électrique, du mode de charge rapide en fonction de ladite instruction d'interruption de charge rapide.

12. Procédé selon l'une quelconque des revendications 7 à 11, comprenant en outre les étapes consistant à :
- détecter et juger, par ledit adaptateur d'alimentation électrique, et dans le cas où la sortie CC est désactivée, si la tension de ladite interface de communication est supérieure au seuil de tension ;
- si la tension de ladite interface de communication n'est pas supérieure au seuil de tension, alors sortir, par ledit adaptateur d'alimentation électrique, un courant continu.

13. Procédé selon l'une quelconque des revendications 7 à 12, comprenant les étapes consistant à :
- envoyer, par ledit adaptateur d'alimentation électrique, une instruction de demande de charge rapide ;
- juger si la tension de ladite batterie atteint la valeur de tension de charge rapide conformément à ladite instruction d'interrogation de charge rapide ;
- si la tension de ladite batterie atteint la valeur de tension de charge rapide, alors renvoyer une commande de charge rapide audit adaptateur d'alimentation électrique ;
- si la tension de ladite batterie n'atteint pas la valeur de tension de charge rapide, alors renvoyer une commande de rejet de charge rapide audit adaptateur d'alimentation électrique ;

14. Procédé selon l'une quelconque des revendications 7 à 13, comprenant en outre les étapes consistant à :
- envoyer, par ledit adaptateur d'alimentation électrique, une requête d'accès à la tension de batterie conformément à la commande de charge rapide ;
- renvoyer les informations de tension de batterie audit adaptateur d'alimentation électrique conformément à ladite requête d'accès à la tension de batterie ;
- ajuster, à l'aide dudit adaptateur d'alimentation électrique, sa tension de sortie en tant que valeur de paramétrage de la tension de charge rapide en fonction des informations de tension de ladite batterie.

15. Procédé selon l'une quelconque des revendications 7 à 14, comprenant en outre les étapes consistant à :
- renvoyer l'instruction d'entrée du mode de charge rapide audit adaptateur d'alimentation électrique ;
- ajuster, par ledit adaptateur d'alimentation électrique, son courant de sortie et sa tension de sortie en fonction de ladite instruction d'entrée du mode de charge rapide en tant que courant de sortie de charge rapide et tension de sortie de charge rapide ;
- envoyer, par ledit adaptateur d'alimentation électrique, une requête d'accès à la tension de batterie ;
- renvoyer les informations de tension de batterie audit adaptateur d'alimentation électrique conformément à ladite requête d'accès à la tension de batterie ;
- juger, par ledit adaptateur d'alimentation électrique et en fonction des informations de tension de ladite batterie, si la différence entre la tension de sortie dudit adaptateur d'alimentation électrique et la tension de la batterie est supérieure au seuil de différence de tension ;
- si la différence entre la tension de sortie dudit adaptateur d'alimentation électrique et la tension de la batterie est supérieure au seuil de différence de tension, alors fermer, par ledit adaptateur d'alimentation électrique, la sortie CC ; et
- si la différence entre la tension de sortie dudit adaptateur d'alimentation électrique et la tension de la batterie n'est pas supérieure au seuil de différence de tension, ajuster, par ledit adaptateur d'alimentation électrique et en fonction des informations de tension de ladite batterie, son courant de sortie.
